Europäisches Patentamt

European Patent Office

Office européen des brevets

(19)

(11) Veröffentlichungsnummer: **0 242 671 B1**

# EUROPÄISCHE PATENTSCHRIFT

(12)

(45) Veröffentlichungstag der Patentschrift: **05.08.92**

(51) Int. Cl.5: **H02P 3/04**, H02K 7/102, B60T 8/00

(21) Anmeldenummer: **87104974.8**

(22) Anmeldetag: **03.04.87**

(54) Bremse für einen Motor.

(30) Priorität: **19.04.86 DE 3613294**

(43) Veröffentlichungstag der Anmeldung:
**28.10.87 Patentblatt 87/44**

(45) Bekanntmachung des Hinweises auf die
Patenterteilung:
**05.08.92 Patentblatt 92/32**

(84) Benannte Vertragsstaaten:
**AT BE CH DE ES FR GB GR IT LI LU NL SE**

(56) Entgegenhaltungen:
EP-A- 0 097 237
GB-A- 2 089 151
US-A- 3 614 565

PATENT ABSTRACTS OF JAPAN vol. 9, no.
126 (E-318) 1849 31 Mai 1985, & JP-A-60
013484

(73) Patentinhaber: **SEW-EURODRIVE GmbH & Co.
Industriestrasse 42
W-7520 Bruchsal(DE)**

(72) Erfinder: **Trümpler, Walter, Dipl.-Ing.
Kleinbachstrasse 21
W-7500 Karlsruhe 41(DE)**
Erfinder: **Schmidt, Josef, Dipl.-Ing.
Dettenheimer Weg 2
W-7523 Graben-Neudorf(DE)**

(74) Vertreter: **Dr.-Ing. Hans Lichti Dipl.-Ing. Heiner
Lichti Dipl.-Phys. Dr. Jost Lempert
Postfach 41 07 60 Bergwaldstrasse 1
W-7500 Karlsruhe 41(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Bremse für einen Motor, insbesondere einen Wechselstrommotor mit einem Elektromagneten und einer Gleichrichterschaltung für den Elektromagneten. Bei derartigen gattungsgemäßen elektromagnetischen Bremsen, bei denen eine Ankerscheibe beim Einschalten in der Regel entgegen der Kraft von Federn bewegt wird, müssen große magnetomotorische Kräfte oder Durchflutungen beim Einschalten aufgebaut werden, um die Ankerscheibe zu bewegen, insbesondere ein kurzzeitiges Ansprechen der Bremse zu erreichen. Nach dem Anziehen der Bremse wird der Luftspalt zwischen der Ankerscheibe und dem Elektromagneten kleiner und damit der magnetische Widerstand verringert, so daß geringere Durchflutungen und damit geringere Halteströme zum Halten der Bremse erforderlich sind.

Es wurde schon vorgeschlagen (US-PS 3 614 565), den Magneten zunächst während kurzer Zeit nach dem Einschalten des Motorstroms mit einer großen Spannung und damit einem entsprechend großen Strom zu beaufschlagen und anschließend den Strom durch die Magnetspule mittels einer Steuerschaltung auf einen kleinen Haltewert zu reduzieren. Dieser läßt sich auch nach dem Abschalten schneller abbauen, so daß die Bremse dann auch wieder relativ schnell abfallen kann.

Der Erfindung liegt die Aufgabe zugrunde, eine gattungsgemäße Bremse dahingehend weiter zu bilden, daß in einfacher Weise die dynamischen Eigenschaften verbessert werden.

Dies Aufgabe wird erfindungsgemäß durch die kennzeichnenden Merkmale des Anspruches 1 gelöst.

Durch die erfindungsgemäße Ausbildung der Bremse werden die dynamischen Eigenschaften einer Bremse verbessert, die zunächst kostengünstiger ausgestaltet werden kann, da sowohl weniger Kupfer für die Wicklung als auch weniger Eisen für den Anker und darüberhinaus preiswerteres Eisen eingesetzt werden können, was den geringen Mehrpreis für eine Schaltelektronik, die lediglich einen Spulenteil mit in den Stromkreis ein- bzw. ausschaltet, mehr als kompensiert. Durch die erfindungsgemäße Ausgestaltung wird erreicht, daß die Bremse einen geringeren Verschleiß hat und eine größere Bremsbelagstandzeit aufweist, da der Belag aufgrund des durch den hohen Einschaltstrom schnellen nziehens der Bremse bei elektromagnetischer Erzeugung der Lüftkraft weniger abgenutzt wird. Denn es wird eine kurze Einschaltzeit durch die kleine Zeitkonstante der Beschleunigerspule erreicht. Dabei fließt kurzzeitig ein hoher Strom, der aber infolge der geringeren Windungszahl nicht zur Übersättigung führt. Darüberhinaus wird der Motor selbst beim Anfahren durch das schnelle Abheben der Bremse weniger erwärmt.

Zum Schalten der Zweige oder Teilspulen der Bremse ist vorteilhafterweise vorgesehen, daß eine Teilspule als Beschleunigungsspule in Reihe mit einem parallel zur anderen Teilspule angeordneten Schalter liegt, der durch ein zugeordnetes Steuerglied schaltbar ist. Diese erfindungsgemäße Weiterbildung schafft die Möglichkeit, daß während des Einschaltens der Bremse die Spannung nur an einen Teil der Spule angelegt wird und damit der Strom nur durch einen Teil der Spule als besonders großer, zum Anziehen der Ankerscheibe ausreichender Strom fießt, während zum Halten die Spannung über die gesamte Spule abfällt, so daß automatisch aufgrund der erhöhten Widerstandes ein geringerer Haltestrom fließt. Das Steuerglied ist vorzugsweise als Zeitschaltglied ausgebildet, dem weiterhin eine der Teilspulen als Vorwiderstand in Reihe zugeschaltet ist.

Solange der Schalter, der vorzugsweise als elektronische Schalter, wie als Thyristor ausgebildet ist, durchgeschaltet ist, fließt der gleichgerichtete Strom über einen Spulenteil, nämlich die Beschleunigungsteilspule, und den Thyristor. Ein Sperren des Thyristors bewirkt einen Stromfluß durch beide Teilspulen und damit der erhöhte Widerstand eine Reduzierung des Stromdurchflusses. Beim Abschalten des Motors, wobei die Bremse einfallen soll, ist der Spule oder einem ihrer Zweige in herkömmlicher Weise ein Freilaufkreis mit einer Freilaufdiode zugeordnet, um die magnetische Energie der Spule nach dem Abschalten abzubauen. Um ein schnelles Einfallen zu ermöglichen, kann dabei ebenfalls in bekannter Weise vorgesehen sein, daß der Freilaufkreis hochohmig gemacht wird, indem ein elektronischer Schalter sperrt, so daß der Strom nach dem Abschalten über einen zum Schalter parallel geordneten Widerstand, wie Varistor fließt. Dieser letztgenannte Schalter wird bisher in bekannter Weise durch die am Motor selbst anliegende Spannung geschaltet. Nach Abschalten des Motors erzeugt dieses selbst noch eine Generatorspannung, die ein Sperren des genannten Schalters verzögert.

Um ein sofortiges Schalten und damit eine Verbesserung des dynamischen Verhaltens der Bremse auch beim Abschalten des Motors und beim Einfallen der Bremse zu erzielen, wird in bevorzugter weiterer Ausgestaltung vorgeschlagen, daß in der Spannungsversorgung des Bremsenmotors ein Stromwandler angeordnet ist, der mit einer Steuerschaltung für einen im Stromkreis der Bremsspule angeordneten Schalter verbunden ist. Erfindungsgemäß wird also zum Schalten des Magneten als Steuersignal für das Öffnen des Freilaufkreises der Bremse nicht die Spannung, sondern der Motorstrom genommen, der im Gegensatz eben zur Spannung sofort nach Unterbrechung der Versorgung des Motors beispielsweise durch Schalten eines Schützes ebenfalls unterbrochen wird, wodurch die Abschaltzeiten weiter reduziert werden. In weiterer Ausbildung ist vorgesehen, daß die Steuerschaltung eine Schmitt-Trigger-Schaltung aufweist und daß dem Leistungsschalter eine Diode antiparallel zugeordnet ist, wobei die Diode einen zusätzlichen Schutz des Schalters, insbesondere eines Feldeffekttransistors, gegen Verpolung sicherstellt.

Als Alternative zu dem ansich bekannten gleichstromseitigen Hochohmigschalten des Freilaufkreises schlägt die Erfindung weiterhin eine Gegenstromerregung vor, so daß sich eine bevorzugte Weiterbildung der Erfindung dadurch auszeichnet, daß dem Freilaufkreis ein Gegenerregungszweig mit einem Schalter zur Gegenstrombeaufschlagung zugeordnet ist. Hiedurch wird die Induktions-Restspannung des Motors nach Abschalten desselben ausgenutzt, um die Bremse im Gegenstrom zu beaufschlagen. Ergänzend sei darauf hingewiesen, daß, wenn der Motor nach Abschaltung keine Restspannung aufweisen würde, so daß keine Gegenbeaufschlagung erfolgen würde, dies einem wechselspannungsseitigen Abschalten entsprechen würde, bei dem die Bremse aufgrund ihrer erfindungsgemäßen Ausgestaltung ohnehin schnell einfallen würde.

Eine wechselspannungsseitige Abschaltung einer mit Gleichstrom gespeisten Spule eines Lüftmagnets ist ansich bekannt, wobei der Schalter zur Durchführung der Schaltung aber zu einem Schütz gehört, mit dem die Netzspannung ein- bzw. ausgeschaltet wird, wobei hieran allerdings kritisiert wird, daß ein Motorschütz mit einem zusätzlichen Schalterkontakt für die Bremsspule und demgemäß zusätzliche Verbindungsleitungen von dem Schütz zu der Schaltungsanordnung für die Bremsspule erforderlich sind, so daß gleichstromseitige Abschaltungen aufgrund der Restspannung des Motors, die die obengenannten Nachteile aufweisen, vorgeschlagen wurde. In weiterer bevorzugter Ausgestaltung sieht die Erfindung eine wechselstromseitige Trennung dadurch vor, daß bei der Abnahme des Schaltsignals über einen Stromwandler, der in der Spannungsversorgung des Bremsenmotors angeordnet ist, der genannte Schalter wechselstromseitig in die Spannungsversorgung der Bremsspule geschaltet ist. Der Schalter ist ein Leistungsschalter und es kommt insbesondere ein Triac in Frage.

Weitere Vorteile und Merkmale der Erfindung ergeben sich aus den Ansprüchen und aus der nachfolgenden Beschreibung in der bevorzugte Ausführungsbeispiele der erfindungsgemäßen Bremseinrichtung unter Bezugnahme auf die Zeichnung im einzelnen erläutert sind. Dabei zeigt:

Fig. 1    ein erstes Ausführungsbeispiel der Erfindung;

Fig. 2    eine schematische Darstellung von Bremse und Motor mit der Schaltung nach Figur 1;

Fig. 3    eine Schaltung zur Verbesserung der Dynamik beim Einfallen der Bremse;

Fig. 4    ein anderes Ausführungsbeispiel ähnlich der der Figur 1 mit verbesserter Anzugsdynamik durch Beschleunigerfunktion;

Fig. 4a   eine konkrete Schaltung zur Figur 4 zur Ansteuerung und Überwachung;

Fig. 5    eine weitere Ausführungsform einer Schaltung ähnlich derjenigen der Figur 3;

Fig. 6    eine Alternative zur Schaltung nach Figur 3, insbesondere für die Ausführungsform der Figur 1; und

Fig. 7    eine bevorzugte Einbaumöglichkeit für eine Schaltung nach Figur 3 oder 6.

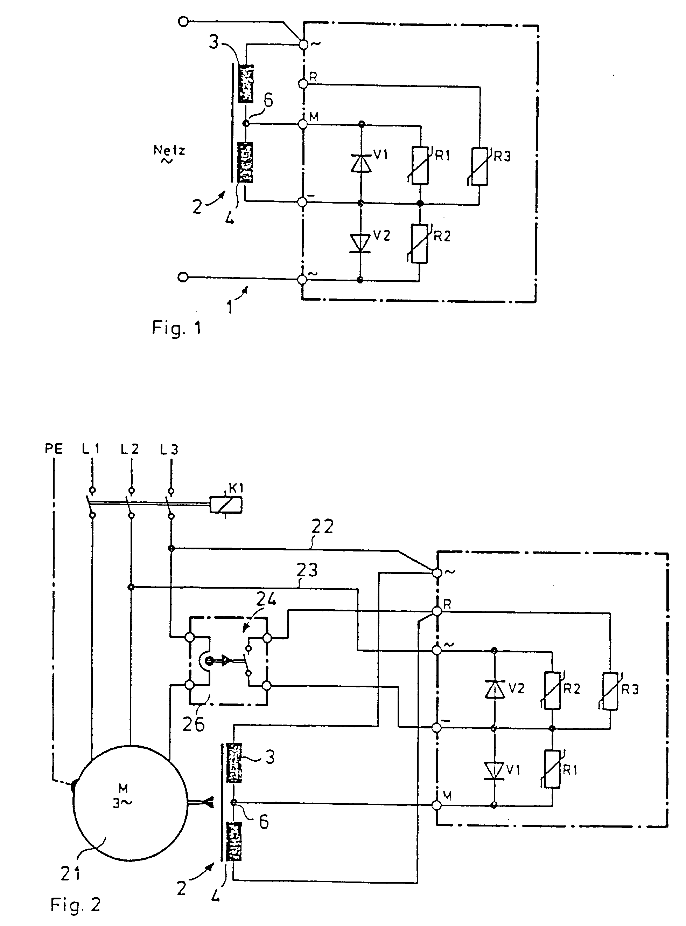

Die erfindungsgemäße Bremseinrichtung, die in der Figur 1 allgemein mit 1 bezeichnet ist, weist einen Elektromagneten 2 mit zwei Teilspulen 3, 4 auf - in der Figur 1 schematisch dargestellt. Zwischen den beiden Teilspulen 3, 4 findet sich ein Zwischenabgriff 6. Die Gesamtspule 2 ist vorzugsweise konstruktiv derart ausgebildet, daß die beiden Teilspulen radial übereinander gewickelt sind und an geeigneter Stelle der Zwischenabgriff 6 herausgeführt ist. Die Teilspule 3 hate etwa die Hälfte bis 1/3 des Widerstands der Teilspule 4. Es ist weiterhin eine Einweg-Gleichrichterschaltung 7 mit zwei Gleichrichterdioden V1, V2 vorgesehen, von denen die Diode V1 als Freilaufdiode parallel zur Teilspule 4 angeordnet ist. Den Dioden V1, V2, sind Varistoren R1 und R2 als Überspannungsschutzelement parallel geschaltet. Schließlich ist noch ein dritter Varistor R3 vorgesehen, der unter Bezugnahme auf die Figur 2 erläutert wird und der beim Abschalten der Bremse in Reihe zum hochohmigen Freilaufkreis der Bremsspule liegt, wie ein Vergleich mit Figur 2 zeigt.

Die Funktion der Ausführungsform der Figur 1 ist nun folgendermaßen:
Bei der einen Halbwelle des Wechselstromnetzes fließt der Strom über beide Teilspulen 3, 4 sowie die Diode V2. Bei der anderen Halbwelle des Netzes sperrt die Diode V2, während ein Freilaufkreis über die Diode V1 freigegeben ist, über den sich die Energie der Spule abbaut. Alleine durch diese Ausgestaltung wird eine Verbesserung der Dynamik der Bremse 1 gegenüber einer herkömmlichen mit gleicher Wärmeerzeugung erreicht und insbesondere die Abfallzeit verkürzt.

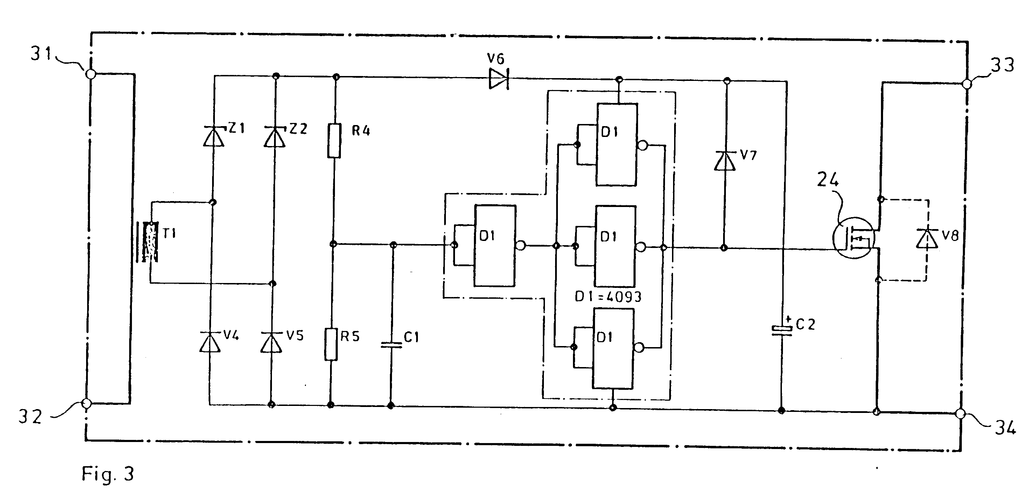

Die Figur 2 zeigt einen zu bremsenden Motor 21 mit Anschlüssen L1, L2, L3 für die Phasen R, S, T eines Wechselspannungsnetzes. In den Anschlußleitungen L1, L2, L3 ist ein Motorschütz K1 angeordnet, über den der Motor 21 an das Netz anschaltbar ist. Von zwei Anschlußleitungen, hier L2, L3 führen Anschlüsse 22, 23 zur Bremseinrichtung der Figur 1. Es ist weiterhin ein durch das Abschalten des Netzes über den Schütz K1 schaltbarer Schalter 24 im Freilaufstromkreis des Lüftmagneten 2 vorgesehen. Der Schalter 24 kann in ansich bekannter Weise durch den Spannungsabfall beim Abschalten des Motors über den Schütz K1 oder aber mittels der in Figur 3 beschriebenen Steuerschaltung 26 in der auch in Figur 2 dargestellten Weise durch den Motorstrom geschaltet werden. Der Schalter 24 ist durch den schon in der Figur 1 enthaltenen Varistor R3 geshuntet. Mit Abschalten des Motors 21 vom Netz her - über den Schütz K1 - wird der durch den Varistor R3 geshuntete Schalter 24 geöffnet und damit der über die Freilaufdiode V1 fließende Freilaufstrom auf einen durch den Varistor R3 begrenzten Wert verringert, so daß der Lüftmagnet die Bremse 1 entsprechend noch schneller einfallen läßt.

In bevorzugter Ausführung kann nun, wie gesagt, weiterhin der Schalter 24 im Freilaufstromkreis des Lüftmagneten Teil einer Steuerschaltung 26, wie sie in der Figur 3 dargestellt ist.

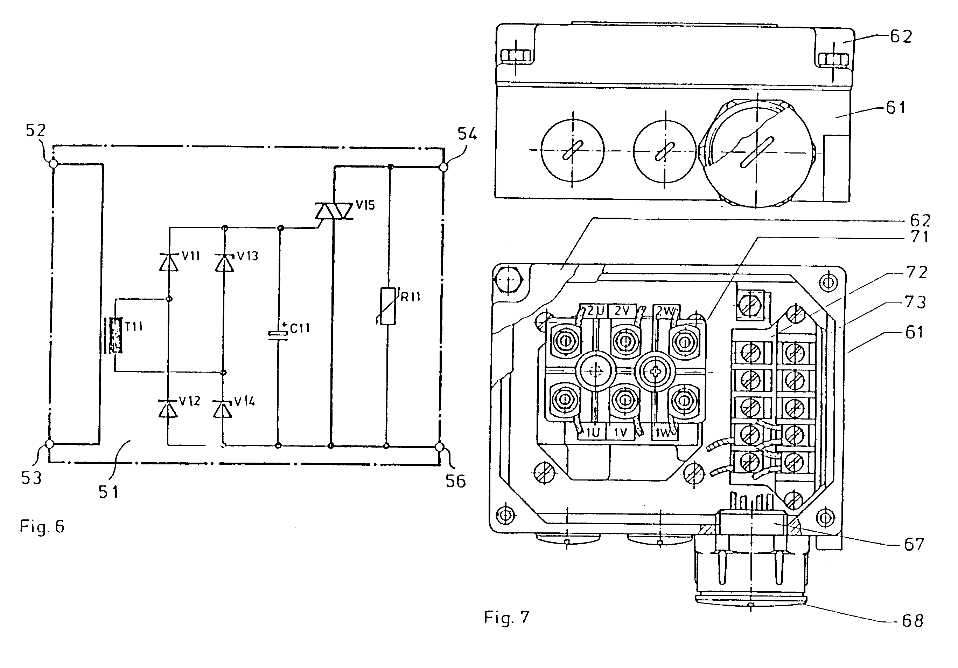

Die Schaltung 26 der Figur 3 wird als solche vorzugsweise als Zusatzgerät in einem separaten Gehäuse ausgebildet. Das Gehäuse kann derart ausgestaltet sein, wie dies unter Bezugnahme auf die Figur 7 beschrieben ist.

Das die Schaltung 26 aufweisende Zusatzgerät weist vier Anschlüsse auf. Mit zwei Anschlüssen 31, 32 wird es in eine der Anschlußleitungen des Motors, im dargestellten Ausführungsbeispiel der Figur 2 in die Leitung L3 eingeschaltet. Die Schaltung 26 weist zunächst als wesentliches Element einen Stromwandler T1 auf, so daß sie den Motorstrom nund nicht die am Motor 21 anliegende Spannung erfaßt. Mit Ausgangsklemmen 33, 34, die dem elektronischen Schalter 24 zugeordnet sind, der im dargestellten Ausführungsbeispiel ein Feldeffekttransistor ist, wird das Zusatzgerät in den Freilaufstromkreis des Lüftmagneten geschaltet. Dem Schalter 24 kann eine antiparallel zugeordnete Diode V8 zugeschaltet werden, um einen zusätzlichen Schutz gegen Verpolung beim Verdrahten zu gewährleisten. Bei Verwendung eines Feldeffekttransistors hat dieser die Diode bereits integriert (als parasitäres Bauelement). Die Steuerschaltung 26 weist zunächst einen Brückengleichrichter 37 mit zwei Dioden V4, V5 und zwei Zener Dioden Z1, Z2 - letztere zur Spannungsbegrenzung - sowie weiterhin einen Schmitt-Trigger D1 auf, der durch einen integrierten Baustein 4093 in entsprechender Beschaltung gebildet ist. Weiterhin ist ein Siebglied R4, R5, C1 vorgesehen, um die Welligkeit des durch den Gleichrichter gleichgerichteten Signals des Stromwandlers T1 herauszufiltern. Die Versorgung des Schmitt-Triggers D1 erfolgt über die Dioden V6 und den Kondensator C2 der dafür sorgt, daß immer eine ausreichende Versorgungsspannung für den Schmitt-Trigger zur Verfügung steht. V7 ist eine Schutzdiode.

Wird nun der Motor ausgeschaltet, indem der Schütz K1 geöffnet wird, so werden auch die Zuleitungen 22, 23 der Bremseinrichtung 1 (Figur 2) spannungslos, so daß die Bremse ansich abfallen sollte. Ein solch schnelles Abfallen wird aber ansich durch beim Abschalten des Motors entstehende Generatorspannungen verzögert. Darüberhinaus entsteht beim Abschalten in der Bremsspule ein Freilaufstrom, der ein Einfallen der Bremse 1 verzögert. Beim Abschalten des Motors über den Schütz K1 wird aber die Stromzufuhr in den Zuleitungen L1 bis L3 unverzüglich unterbrochen, so daß über die in der Zuleitung L3 angeordnete Steuerschaltung 26 der Schalter 24 bei Unterschreiten der unteren Kippspannung des Schmitt-Triggers unverzüglich in den gesperrten Zustand überführt wird, so daß (Figur 2) der über die Freilaufdiode V1 fließende Freilaufstrom der Bremsspule 2 gegen die Varistorspannung fließen muß und damit dem Bremssystem die magnetische Energie schnell entzogen wird, was die Bremse noch schneller einfallen läßt.

Sobald der Motor wieder eingeschaltet, also an das Netz angeschaltet wird und damit Strom fließt, wird der Schalter 26 wieder durchgeschaltet.

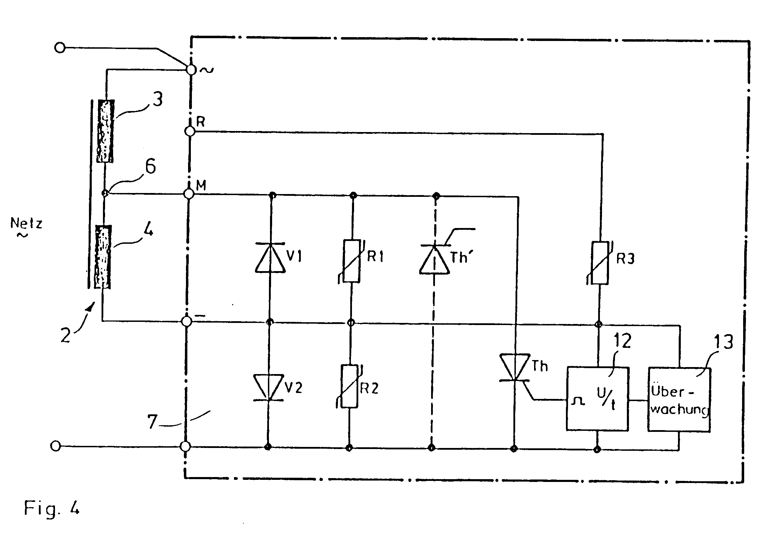

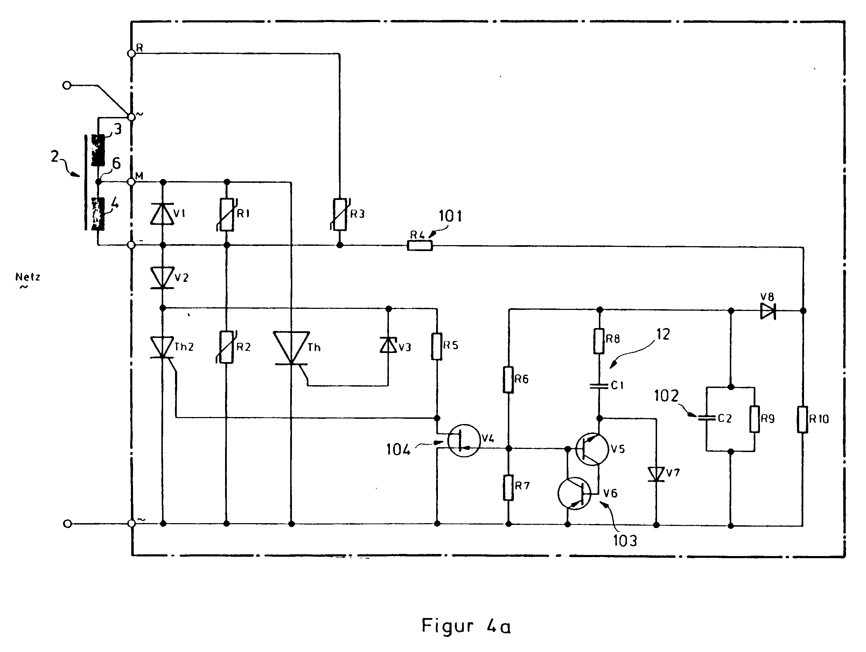

In der Figur 4 ist eine weitere Ausführungsform der Bremse beschrieben. Diese Ausgestaltung geht aus von der Figur 1, so daß hinsichtlich der übereinstimmenden Merkmale auf die dortigen Erläuterungen verwiesen wird. Mit dem Zwischenabgriff 6 und in Reihe zur Teilspule 3 ist weiter ein Thyristor Th geschaltet, der bewirkt, daß die Teilspule 3 als Beschleunigungsspule schaltbar ist. Der Thyristor Th selbst wird durch ein Zeitschaltglied 12 geschaltet, insbesondere gezündet, welches ein RC-Glied (selbst nicht dargestellt) aufweist, daß das Zündsignal über eine gewünschte Zeit an den Thyristor Th anlegt. Zur Nachtrigerung des Zeitschaltglieds 12 bei Unterspannungen ist hier eine Überwachungseinheit 13 vorgesehen, deren Einsatz von der Dimensionierung der Bremse abhängt und die weiter unten definierter erläutert ist. Die Einheit 13 arbeitet vorzugsweise nach dem Prinzip der relativen Spannungsmessung, so daß die Funktion der Einrichtung unabhängig von der Versorgungsspannung ist. Gegenüber der Ausgestaltung der Figur 1 ist die Dimensionierung der Spule und der Teilspulen 6 derart, daß ohne Schaltung der durch die gesamte Spule 2 fließende Strom nicht mehr zum Anziehen der Bremse ausreicht. - Es kann also bei dieser Ausgestaltung die gleiche Spule wie in Figur 1 bei einer "schwereren" Bremse für einen stärkeren Motor eingesetzt werden.

Die Funktion der in der Figur 4 dargestellten Schaltung ist nun grundsätzlich folgendermaßen:

Bei Anlegen von Netzspannung und damit Einschalten des Motors 21 wird der Thyristor Th als elektronischer Schalter durchgeschaltet, so daß durch die Beschleunigungsspule 3 aufgrund des gegenüber der Gesamtspule 2 kleinen Innenwiderstandes ein großer Strom fließt, der einen großen magnetischen Fluß und damit eine schnelle Anzugswirkung und eine kleine Ansprechzeit bewirkt. Nach Ansprechen des Bremsmagneten ist der hohe magnetische Fluß nicht mehr erforderlich, da der Luftspalt zwischen Anker und Magnetspule und damit der magnetische Widerstand verringert wurde. Es sind daher geringere Haltekräfte, damit geringere magnetische Durchflutungen und geringere Halteströme erforderlich. Nach Ansprechen wird daher der Thyristor Th durch das Zeitschaltglied 12 gesperrt, so daß der Netzstrom über die gesamte Spule, also beide Teilspulen 3, 4 fließt, wobei er durch die den Gleichrichter bildenden, entgegengesetzt ausgerichteten Dioden 8, 9 gleichgerichtet wird. Aufgrund des größeren Widerstandes der Gesamtspule 3, 4 fließt ein geringerer Haltestrom, der einen geringeren Energieverbrauch und beim Abschalten ein schnelleres Abschalten ermöglicht.

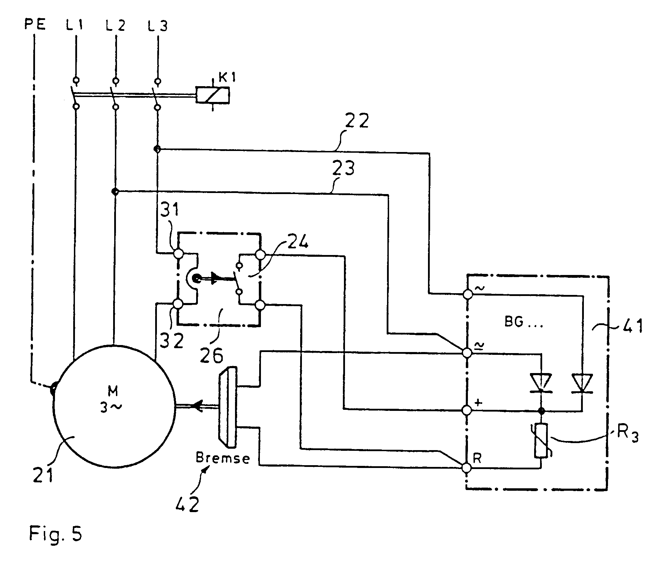

Die vorstehend beschriebene Bremseinrichtung kann ebenso wie eine herkömmliche Art (Figur 5) entsprechend derjenigen der Figur 1 in der aus der Figur 2 ersichtlichen Weise zur zusätzlichen Schnellabschaltung mittels eines - durch den Varistor 3 - hochohmig geschalteten Freilaufkreises geschaltet werden.

Weiterhin kann zur Schnellabschaltung bzw. schnellen Erregung der Bremsspule eine Gegenerregung vorgesehen werden, wie sie in der Figur 4 skizzenhaft gestrichelt angedeutet ist. Hierzu wird antiparallel zu dem Thyristor Th ein weiterer Thyristor Th angeordnet, dem eine der Elektronik 12 entsprechende Schaltelektronik (im einzelnen nicht dargestellt) zugeordnet ist. Der Thyristor Th schaltet die negative Netzhalbwelle auf die Beschleunigungsspule 3. Die Spannung kommt aus dem Motor, so daß eine zeitliche Steuerung nicht erforderlich ist. Die Gegenstrombeaufschlagung führt zur schnellen Entmagnetisierung des Systems und damit zum schnellen Bremseneinfall. Der Thyristor Th kann dabei in geeigneter Weise,beispielsweise durch einen Stromsensor T1 nach Figur 3 gezündet werden. Die Schaltung ersetzt die Steuerleitung und den Schaltkontakt einer "gleichstromseitigen Trennung", beispielsweise wie nach der Figur 2.

Wie oben gesagt wurde, kann es je nach Dimensionierung der Bremse bei einem Spannungseinbruch dazu kommen, daß die Haltekraft der gesamten Bremsspule (beider Teilspulen) nicht mehr ausreicht um die Bremse zu halten, so daß sie einfällt. Es muß dann dafür gesorgt werden, daß die Bremse, wenn die Spannung wieder kommt, wieder angezogen wird, was - je nach Dimensionierung der Bremse - die Bremse bei Stromfluß durch die gesamte Spule (gesperrten Thyristor Th) gegebenenfalls nicht leisten kann. Es muß in diesem Falle der Thyristor Th kurzzeitig durchgeschaltet werden, damit ein erhöhter Stromfluß durch die Teilspule 3 einsetzt, der, wie beim Einschalten, die Bremse wieder zum Anziehen bringt. Eine konkrete Schaltung hierzu ist in Figur 4a dargestellt. Die Überwachungsschaltung 13 wird über einen Vorwiderstand 101 von beispielsweise ca. 180 K und die Bremsspule 2 aus dem Netz gespeist. Es wird hier die relative Spannung einerseits an einem Kondensator 102 mit 0,33 uF und andererseits am Zeitglied 12 mit beispielsweise 220 K 0,1 uF genommen. Bei Ansteigen der Spannung (einer Halbwelle), wird aufgrund einer auftretenden Spannungsdifferenz zunächst eine Doppeltransistoranordnung 103 (die als Thyristor aufgefaßt werden kann), nachfolgend ein Feldeffekttransistor (FET) 104 derart geschaltet, daß der Thyristor Th zunächst durchgeschaltet wird, so daß die Beschleunigungsspule 3 alleine zwischen den Netzklemmen angelegt ist. Wenn dann über das Zeitglied 12 die anliegende Spannung ausgeglichen ist, wird der Zündimpuls vom Thyristor Th weggenommen, so daß dieser sperrt. Bei Einfallen der Spannung findet ein Entladen statt, so daß beim erneuten Anwachsen wieder die Spannungsdifferenz auftritt. Die weiteren Glieder dienen zur Abstimmung für den jeweiligen Anwendungsfall.

Wenn der FET 104 durchgeschaltet ist, liegt am Thyristor Th 2 kein Signal, dadurch kann der Thyristor Th bei positiver Halbwelle zünden. Wenn der FET 104 sperrt liegt am Thyristor Th 2 ein Zündsignal an, was ihn bei positiver Halbwelle leitend macht und damit dem Thyristor Th die Zündspannung wegnimmt. Bei einer bestimmten Spannungsdifferenz am Zeitglied 12 und dem fraglichen Kondensator (102) der fragliche Doppeltransistor 103 (Thyristor) durchgeschaltet, wodurch der Transistor 104 leitend wird (selbstleitender FET) und der Thyristor Th zünden kann. Damit gleichen sich die Spannungen von C1 und C2 an, der Doppeltransistor 103 sperrt und somit auch der Transistor 104, was die Beschleunigerfunktion wieder ausschaltet. Nach Reduzierung der Spannungsdifferenz unter eine bestimmte Grenze müßte der Thyristor durchgeschaltet sein, damit der FET sperrt.

Die Figur 5 zeigt entsprechend der Figur 2 die Schaltung einer herkömmlichen Bremse durch den Strom des Motors 21 mittels einer Schaltung 26 nach der Figur 3 zur gleichstromseitigen Trennung zwecks hochohmig schalten des Freilaufkreises. Es sind wieder der Motor 21 mit den Anschlüssen L1, L2, L3 für die Phasen R, S, T eines Wechselspannungsnetzes und der in Anschlußleitung L1, L2, L3 angeordnete Motorschütz K1 dargestellt, über den der Motor 21 an das Netz anschaltbar ist. Von den Anschlußleitungen L2 und L3 führen auch hier die Anschlüsse 22, 23 nun zu einer Schaltungsanordnung 41, die, wie gesagt, in der Ausführungsform der Figur 5 eine herkömmliche Schaltungsanordnung ist. Die in der Figur 5 dargestellte Schaltungsanordnung weist einen Gleichrichter mit zwei Null-Dioden in Einwegschaltung auf. Zur Beherrschung der hohen Abschaltgeschwindigkeiten von großen Induktivitäten ist die zusätzliche Beschaltung mit dem Varistor R3 vorgenommen worden. Wenn mit Abschalten des Motors 21 vom Netz her der durch den Varistor R3 geshunteter Schalter 24 in dem eine Freilaufdiode aufweisenden Freilaufstromkreis der Spule der Bremse 42 geöffnet wird, so wird der über die Freilaufdiode fließende Freilaufstrom auf einen durch den Varistor R3 begrenzten Wert verringert, so daß der Lüftmagnet die Bremse 1 entsprechend schnell einfallen läßt. Soweit ist die Schaltung der Figur 5, sofern sie die Steuerschaltung 41 ensprechend der Darstellung der Figur 5 aufweist, bekannt.

Weiterhin ist nun aber der Schalter 24 im Freilaufstromkreis des Lüftmagneten Teil der Steuerschaltung 27 der Figur 3, die mit ihren Anschlüssen 31, 32 in die Anschlußleitung L3 des Motors 21 geschaltet so daß der Schalter 24 hier in erfindungsgemäßer Weise durch den Motorstrom geschaltet wird.

Die Schaltung der Figur 3 wird als solche vorzugsweise als Zusatzgerät in einem separaten Gehäuse ausgebildet. Das Gehäuse kann durch Standardbauteile,wie ein übliches Verschraubteil und einen Blindstopfen ausgebildet sein, so daß das Zusatzgerät durch Einschrauben in das Gewinde einer Kabeldurchführung am Klemmkasten des Motors angesetzt werden kann, so daß sich der Einsatz eines größeren Klemmkasten gegenüber herkömmlichen erübrigt.

Der erfindungsgemäße Zwischenabgriff 6 an der Bremsspule 2 und der Anordnung des Freilaufstromkreises über die Teilspule 4 mit der Freilaufdiode V1, ermöglicht statt der bisher bevorzugten gleichstromseitigen Trennung ein gleichartiges Ergebnis durch wechselstromseitige Trennung bei geringeren Aufwand. Hierzu ist eine Schaltung 51 nach Figur 6 vorgesehen, die mit ihren Anschlüssen 52 und 53 ähnlich der Schaltung der Figur 3 in eine Zuleitung L3 zum Motor 21 geschaltet wird. Mit den Ausgängen 54, 56 wird die Schaltung wechselstromseitig in eine der Versorgungsleitungen 22, 23 der Bremsspule 2 (Figur 2) eingeschaltet. Die Schaltung 51 weist zunächst wieder einen Stromwandler T11 auf, dem ein Gleichrichter mit Dioden V11, V12 sowie zur Spannungsbegrenzung Zenerdioden V13, V14 nachgeordnet ist. Zur Überbrückung des jeweils kurzzeitigen Spannungsabfalls des Wechselsignals ist ein Kondensator 10, 11 vorgesehen. Die vom Stromwandler T11 und vom Kondensator C11 geglättete Spannung wird auf den Steuereingang eines Triacs V15 gegeben, dem ein Varistor R11 parallel geschaltet ist. Bei Abschalten der Stromversorgung für den Motor wird über den Stromsensor T11 die Versorgung der Bremsspule 2 durch Sperren des Triacs V15 sofort unterbrochen bzw. durch den Varistor R11 auf einen Wert herabgesetzt, der zum Halten der Bremse nicht ausreicht. Durch diese erfindungsgemäße Ausgestaltung sind die bisher bei wechselstromseitiger Trennung in nachteiliger Weise erforderlichen eigenen Leitungen, beispielsweise zu einem Schütz als Schaltern nicht notwendig.

Die Figur 7 zeigt eine konstruktive Ausgestaltung zur Aufnahme zusätzlicher Schaltungen, insbesondere mit Stromsensoren, wie die der Figuren 3 und 6, ohne das größere Klemmkästen vorgesehen sein müssen. Ein herkömmlicher Klemmkasten 61 weist neben seiner Abdeckung 62 eine Reihe von Kabeldurchführungen 63 auf, die ein Innengewinde aufweist und durch mit einem Außengewinde versehenen Blindstopfen 64 verschlossen werden, soweit sie nicht genutzt werden. In einen solchen Durchbruch 63 wird ein zusätzliches Gehäuse 66 mit einem Gewindeansatz 67 eingeschraubt, das frontseitig mit seiner Abdeckung 68 verschlossen ist. Im dargestellten Ausführungsbeispiel ist das Zusatzgehäuse ein Reduzier- bzw. Erweiterungsstück, in das frontseitig ein angepaßter Blindstopfen dichtend, unter Zwischenlage von Dichtungen, wie einem O-Ring (im einzelnen nicht dargestellt) eingeschraubt ist.

Mit 71 ist eine Klemmplatte bezeichnet. Bei 72 befindet sich der Bremsgleichrichter. 73 bezeichnet einen Klemmblock. Die Verkabelung ist im einzelnen nicht dargestellt.

**Patentansprüche**

1. Bremse für einen Motor, insbesondere einen Wechselstrommotor, mit einem Elektromagneten und einer Gleichrichterschaltung für den Elektromagneten, dadurch gekennzeichnet, daß die Spule des Elektromagneten (2) durch einen Zwischenabgriff (6) in zwei Teilspulen (3, 4) unterteilt ist, wobei der gleichgerichtete Strom einer Halbwelle durch beide Teilspulen fließt und daß der Freilaufstromkreis der Spule (2) nur über eine Teilspule (4) derselben gebildet ist.

2. Bremse nach Anspruch 1, dadurch gekennzeichnet, daß eine Teilspule (3) als Beschleunigungsspule in Reihe mit einem parallel zur anderen Teilspule (4) angeordneten Schalter (Th) liegt, der durch ein zugeordnetes Steuerglied (12) schaltbar ist.

3. Bremse nach Anspruch 1, dadurch gekennzeichnet, daß der Gleichrichterschaltung (7) Überspannungsschutzelemente (R1, R2) zugeordnet sind.

4. Bremse nach Anspruch 3, dadurch gekennzeichnet, daß jeweils ein Überspannungsschutzelement (R1, R2) parallel zu einer Diode (V1, V2) des Gleichrichters (7) liegt.

5. Bremse nach einem der Ansprüche 2 bis 4, dadurch gekennzeichnet, daß das Steuerglied (12) für den Schalter (Th) mit zumindest einer Teilspule (3, 4) als Vorwiderstand in Reihe geschaltet ist.

6. Bremse nach einem der Ansprüche 2 bis 5, dadurch gekennzeichnet, daß das Steuerglied (12) für den Schalter (Th) ein Zeitglied ist.

7. Bremse nach einem der vorangehenden Ansprüche, dadurch gekennzeichnet, daß in der Spannungsversorgung (L1 bis L3) des Bremsenmotors (21) ein Stromwandler (T1) angeordnet ist, der mit einer Steuerschaltung (26; 51) für einen im Stromkreis der Bremsspule (3, 4) angeordneten Schalter (24; Tr) verbunden ist.

8. Bremse nach Anspruch 7, dadurch gekennzeichnet, daß die Steuerschaltung einen Schmitt-Trigger (37) aufweist.

9. Bremse nach Anspruch 7, dadurch gekennzeichnet, daß dem Schalter (24) eine Diode (V8) antiparallel zugeordnet ist.

10. Bremse nach einem der Ansprüche 7 bis 9, dadurch gekennzeichnet, daß dem Schalter (24, Tr) ein Spannungsbegrenzer parallel geschaltet ist.

11. Bremse nach Anspruch 7 oder 10, dadurch gekennzeichnet, daß der Schalter (24, Tr) gleichstromseitig in die Spannungsversorgung der Bremsspule geschaltet ist.

12. Bremse nach einem der Ansprüche 1 bis 6, dadurch gekennzeichnet, daß dem Freilaufkreis ein Gegenerregungszweig mit einem Schalter (Th ) zur Gegenstromerregung zugeordnet ist.

## Claims

1. Brake for a motor, particularly an alternating current motor, with an electromagnet and a rectifier circuit for the electromagnet, characterized in that the coil (2) of the electromagnet is subdivided by an intermediate tap (6) into two partial coils (3,4), in which the rectified current of a half-wave flows through both partial coils and that the free-running circuit of the coil (2) is only formed over a partial coil (4) thereof.

2. Brake according to claim 1, characterized in that a partial coil (3), as the accelerating coil, is positioned in series with a switch (Th) arranged parallel to the other partial coil (4) and which can be switched by an associated control member (12).

3. Brake according to claim 1, characterized in that overvoltage protection elements (R1,R2) are associated with the rectifier circuit (7).

4. Brake according to claim 3, characterized in that in each case one overvoltage protection element (R1,R2) is parallel to a diode (V1,V2) of the rectifier (7).

5. Brake according to one of the claims 2 to 4, characterized in that the control member (12) for the switch (Th) is connected in series with at least one partial coil (3,4) as a series resistor.

6. Brake according to one of the claims 2 to 5, characterized in that the control member (12) for the switch (Th) is a timing element.

7. Brake according to one of the preceding claims, characterized in that a current transformer (T1) is located in the power supply (L1 to L3) of the brake motor (21) and is connected to a control circuit (26;51) for a switch (24; Tr) located in the circuit of the brake coil (3,4).

8. Brake according to claim 7, characterized in that the control circuit has a Schmitt trigger (37).

9. Brake according to claim 7, characterized in that a diode (V8) is associated in antiparallel manner with the switch (24).

10. Brake according to one of the claims 7 to 9, characterized in that with the switch (24,Tr) a voltage limiter is connected in parallel.

11. Brake according to claim 7 or 10, characterized in that the switch (24,Tr) is connected on the direct current side into the power supply of the brake coil.

12. Brake according to one of the claims 1 to 6, characterized in that a counterexciting branch with a switch (Th) is associated with the free-running circuit for countercurrent excitation.

**Revendications**

1. Frein pour un moteur, en particulier un moteur à courant alternatif, comprenant un électro-aimant et un montage en redresseur pour l'électro-aimant, **caractérisé en ce** que la bobine (2) de l'électro-aimant est divisée par une prise intermédiaire (6) en deux bobines partielles (3, 4), le courant redressé parcourant pendant une demi-onde les deux bobines partielles, et que le circuit de roue libre de la bobine (2) n'est réalisé que par l'intermédiaire d'une bobine partielle (4) de celle-ci.

2. Frein selon la revendication 1, caractérisé en ce qu'une bobine partielle (3) est montée, en tant que bobine accélératrice, en série avec un commutateur (Th) placé en parallèle avec l'autre bobine partielle (4), qui peut être actionné par un organe de commande (12) associé.

3. Frein selon la revendication 1, caractérisé en ce qu'au montage en redresseur (7) sont associés des éléments limiteurs de tension (R1, R2).

4. Frein selon la revendication 3, caractérisé en ce que respectivement un élément limiteur de tension (R1, R2) est monté en parallèle avec une diode (V1, V2) du redresseur (7).

5. Frein selon l'une des revendications 2 à 4, caractérisé en ce que l'organe de commande (12) pour le commutateur (Th) est monté en série avec au moins une bobine partielle (3, 4) comme résistance série.

6. Frein selon l'une des revendications 2 à 5, caractérisé en ce que l'organe de commande (12) pour le commutateur (Th) est un élément temporisateur.

7. Frein selon l'une des revendications précédentes, caractérisé en ce que dans l'alimentation (L1 à L3) du moteur de frein (21) est inséré un transformateur de courant (T1) qui est relié à un circuit de commande (26; 51) pour un commutateur (24; Tr) placé dans le circuit de la bobine de frein (3, 4).

8. Frein selon la revendication 7, caractérisé en ce que le circuit de commande comprend une bascule de Schmitt (37).

9. Frein selon la revendication 7, caractérisé en ce qu'une diode (V8) est associée en antiparallèle au commutateur (24).

10. Frein selon l'une des revendications 7 à 9, caractérisé en ce qu'un limiteur de tension est monté en parallèle avec le commutateur (24, Tr).

11. Frein selon l'une des revendications 7 ou 10, caractérisé en ce que le commutateur (24, Tr) est inséré du côté courant continu dans l'alimentation en courant de la bobine de frein.

12. Frein selon l'une des revendications 1 à 6, caractérisé en ce qu'au circuit de roue libre est associée une branche d'excitation mutuelle avec un commutateur (Th) pour l'excitation à contre-courant.

Fig. 1

Fig. 2

Fig. 3

Netz ~

Fig. 4

Figur 4a

Fig. 5

Fig. 6

Fig. 7

EP 0 242 671 B1